# EUROPEAN PATENT SPECIFICATION

(11) **EP 2 385 680 B1**
(45) Date of publication and mention of the grant of the patent: **03.10.2012**
(21) Application number: 10162200.9
(22) Date of filing: 06.05.2010
(51) Int. Cl.: H04L 29/08

(54) **Content delivery over a peer-to-peer network**
Inhaltsbereitstellung über ein Peer-to-Peer-Netzwerk
Livraison de contenu dans un réseau poste à poste

(43) Date of publication of application: 09.11.2011
(73) Proprietor: Voddler Sweden AB, 115 41 Stockholm (SE)
(72) Inventor: Ekblom, Per Ola, 115 41, Stockholm (SE); Johansson, Per Henrik, 115 41, Stockholm (SE); Olsson, Bengt Martin, 115 41, Stockholm (SE); Pettersson, Nils Patrik, 115 41, Stockholm (SE)
(74) Representative: Hansson, Anders Max

(56) References cited:
- US-A1- 2002 066 026
- US-A1- 2005 216 559
- US-A1- 2008 059 631
- US-A1- 2008 289 006

## Description

### Technical field

The invention disclosed herein relates to distributed networks for on-demand delivery of digital content objects, such as images, audio and video. In particular, it relates to apparatus and methods for such delivery over networks of the peer-to-peer type.

### Background of the invention

The earlier patent application "Push-pull based content delivery system", published as US 2008/059631 A1, describes a decentralized content delivery network for scalable delivery of relatively large content objects. The content delivery network is embodied as an overlay network with (a sub-domain of) the Internet as basis, and includes user nodes and at least one publication server, respectively operated by end users and a network operator. The network is scalable in the sense the number of end users may be increased without necessitating a proportional cost increase on the operator side. When an end user requests playback of a certain content object, the necessary data will be transmitted to, and possibly stored at, the user node. The publication server is adapted to package new content objects and introduce them into the network by storing (caching) them at an initial collection of user nodes. Playback requests made after the introduction of a new content object will cause the content object data to diffuse, in a peer-to-peer fashion, to user nodes outside the initial collection, which is likely to facilitate playback requested later by other nodes. In addition to playback requests, the diffusion may be further stimulated by network monitoring and load balancing functionalities provided in the delivery system, which generally contribute to an even distribution of content object data.

Sufficient quality of service is known to be essential to the user satisfaction in a content delivery network. The quality of service supplied by a given content delivery network of this type - as measured by latency times, failure probability, available bit rate and the like - may be improved by upgrading its hardware components, e.g., by providing more powerful processing units and higher-bandwidth data transmission paths, by requiring the user nodes to allow a larger cache storage space, by increasing the number of support servers, etc. Many of these measures will incur added hardware costs on the part of the delivery network operator or will call for a reallocation of resources that are often outside the operator's control. However, another improvement potential resides in modifying the way in which the components interact, e.g., the communication protocols, and optimizing the allocation of tasks within the delivery network.

A system for distributing media files to authorised recipients is known from US 2008/0289006 A1. A registered user may request media files stored in fragmented form on a server park located behind a firewall. The server park includes servers which may exchange media file fragments by means of a torrent application executing on each of the servers. The system further includes a tracker for maintaining data relating to the media files available for download from the server farm. A distribution server is responsible for user authentication and uploading of new material into the system.

### Summary of the invention

An object of the present invention is to provide a content delivery system enabling an efficient distribution of content objects. In particular, it is an object to provide such a network supplying a satisfactory quality of service to a number of users that scales well with network operator investments.

The present invention achieves at least some of these objects by devices for use in a content delivery system and methods for distribution of content objects in such a system as defined by the independent claims. The dependent claims define embodiments of the invention.

As used herein, a *package* is a subset of the data that represent a content object. The partition into packages does not necessarily follow the structure of the content object perceived by a user, e.g., parts, episodes, chapters or scenes; rather, the primary aim of such partition is to provide data packages of a size that is suitable in particular for storage at and transmission between the user nodes in the delivery system. Content objects and their packages are often linearly structured in the sense that the content object is intended to be played in some linear order. For instance, the frames of a video sequence are naturally ordered with respect to their playing order, as are the samples of an audio file; similarly, the pages of an electronic book are linearly ordered, as are photographs in an album. In contrast hereto, there is no predefined viewing order for the pixels in a still image or a video frame. Linear content objects of this kind may be conveniently partitioned into packages while respecting the linear structure; then, advantageously, playback may start already when the beginning of the content object has been cached (buffering), that is, before the later packages have been cached.

In one aspect, the invention provides an advantageous method for distributing a content object using a publication server. The publication server is connected to a content delivery system, such as a communication network (e.g., overlay network provided on top of an available communication network) comprising user nodes and the publication server. Each user node is adapted to provide on-demand media playback, that is, playback of a content object (not necessarily all content objects that are being distributed by the delivery system, as detailed below) at the request of a user. Additional devices not relevant to this invention or not active in the distribution may be included in the network as hardware entities or as distributed software-implemented functionalities. The present method is useful primarily for distributing a content object that has not earlier been available via the (relevant sub-area of the) delivery system. It may also be applied with the aim of restoring or improving the availability of an existing content object, for instance, when its data are localized in a certain sub-area (or cluster) of the system, from which they are deemed to diffuse too slowly into other areas if playback requests are relied on.
- According to the distribution method of this aspect, the publication server is supplied with a content object by receiving it from another entity in a communication network to which the server is connected, or by retrieving it from a storage means.
- The publication server then defines a partition into packages of the content object. More precisely, the server establishes whether the supplied content object is already divided into packages or whether it is necessary to partition the content object into packages.
- Having defined the partition into packages, the publication server proceeds to defining an *initial distribution plan.* Preferably, such initial distribution plan represents a desirable caching status of the different content object packages that provides an efficient starting point for subsequent diffusion by playback requests. As discussed in US 2008/059631 A1, the plan may be drawn up while taking into account the network topology and typical transmission rates in different segments of the delivery system. The initial distribution plan may be expressed as a collection of user nodes which are to cache at least a portion of the content object and for each user node a specification of content object packages (referring to the partition into packages already defined) to be cached at that node.
- The initial distribution plan is then transmitted to the nodes which, according to the plan, are intended to cache some of the content object data. When a user node has received sufficient information regarding what content object packages it is supposed to cache, it may initiate inquiries to other user nodes for these packages so as to carry out the initial distribution plan.

In normal operation, the user node will effect playback without communicating with the publication server. As a rule, however, it receives content object packages from other user nodes.

A collection of user nodes is identified by the initial distribution plan. The collection may comprise a list of unique user node identifiers, such as MAC or IP addresses. This is not an essential feature of the invention, however, for the collection may equally well be described in generic terms, such as by qualifying conditions relating to a node's network location, geographic location, storage capacity, connection speed and other properties. Each set of such conditions, as specified for a given content object package, may be satisfied independently by more than one user node, and the initial distribution plan may in some embodiments specify a desirable number of nodes corresponding to this set. Still, the number of candidates satisfying a given set of conditions may be greater than the number of user nodes that is actually required to cache a given content object package. This gives the content delivery system an advantageous latitude enabling it to choose nodes that are currently under moderate load. In one embodiment, user nodes which are currently in a load condition allowing them to cache more content object data are adapted to report their availability (e.g., idleness) to the publication server of their own motion. In another embodiment, the publication server may poll a current load status from user nodes in the delivery system in order to establish their availability for caching more content object packages. For each of these embodiments, the server selects available nodes to carry out the initial distribution plan while ticking off entries (packages) in the initial distribution plan to verify that all packages have been assigned for caching by user nodes.

As a variation to this, a mixed procedure may be adopted, by which the server initially entrusts those nodes from which it has received availability notifications with caching of particular packages. The server may tick off packages from the initial distribution plan if a sufficient number of nodes has been entrusted with their caching. Later, the server transmits messages relating to packages still waiting to be cached after a predetermined time, to the effect that they are cached by user nodes irrespective of their current load status. This is a way of giving priority to available nodes.

The initial distribution plan may be transmitted in its entirety to all nodes in the collection or to all nodes in the delivery system (e.g., by means of a broadcast communication). This provides the advantage of signalling to nodes, which may later request playback of the content object, the locations where packages of the content object are cached and thus available to other nodes. As an alternative, it is possible to extract a portion for each user node (or for a group of nodes that are to store the same set of content object packages) that contains the information relevant to that node. Clearly, by this alternative, communication of the initial distribution plan is performed in a lean manner, but on the other hand requires an extraction (or sorting) step before this process can begin.

A second aspect of the invention relates to a publication server for use in a content delivery system. The publication server is adapted to execute the method of distributing content objects described above. To this end, it comprises one or more communication means for communicating with a network administrator, with user nodes and possibly with other servers. Further, the server comprises a partitioning means for defining a partition of the content object into at least two packages; as noted above, the publication server may be adapted to receive a content object in partitioned form, wherein the partitioning means merely recognizes this existing partition for later processing stages, but may also, in other embodiments, be adapted to partition a non-partitioned content object into packages. The server also comprises a distribution planner adapted to define an initial distribution plan for the packages of the content object. For a given content object, the distribution planner may, similarly to the partition into packages, apply an existing distribution plan or draw up a new plan, either randomly, according to a predefined algorithm or in a semi-random manner, so as to achieve a suitable starting point for the subsequent diffusion through users' playback requests. The communication means then sends out the initial distribution plan - or relevant portions thereof - to the concerned user nodes. As already mentioned, the server's transmission of the initial distribution plan to user nodes may be triggered by received notifications (indicating a node being under moderate load or having available capacity) transmitted from user nodes of their own motion. After receipt of the initial distribution plan, the user nodes may begin caching the content object packages specified therein.

In a third aspect, there is provided a user node adapted to cooperate with a publication server according to the invention in a content delivery system. According to the invention, the user node comprises communication means, storage means, playback means and input means. Using the input means, a user may request playback of a content object that has been made available (published) in the content delivery system. Playback of a given content object may be available to all user nodes, but may as well be restricted through differences in coding, digital rights management (DRM) features and the like. The storage means of the user node may be used for the purpose of caching content object data, more precisely for storing content object packages having been requested for playback (buffering) or for preliminary caching, possibly initiated by a publication server, before the user has requested playback of the concerned content object. The user node is adapted to receive, using its communication means, initial distribution information from the publication server, this information being in the form of a complete initial distribution plan or only a portion relevant to the concerned user node or a group that this node belongs to. The user node is adapted to cache the content object packages specified by the initial distribution information. The caching may consist in that the communication means transmits requests for the content object packages to other user nodes, that the communication means receives requested packages and that the user node's storage means stores the received packages.

A fourth aspect of the invention provides a distribution method to be performed by a user node. The method is analogous to the function of the user node according to the third aspect.

In a fifth aspect, the invention relates to a computer program product comprising a computer-readable medium storing instructions for causing a programmable computer to function as a user node. The invention further provides a computer program product for causing a computer to function as a publication server as set out above; the computer may in particular be a programmable network server.

In respect of analogous aspects of the invention, such as publication server and distribution method, it is noted that every possible embodiment of the invention as a method corresponds to an analogous embodiment of the invention as an apparatus for performing the method, and vice versa. There is a corresponding analogy between two embodiments as a publication server and a user node, respectively, which may cooperate to deliver content to a user. Because such embodiments generally have corresponding technical features and share the same advantages, they are not always described separately in this disclosure, although each falls under the scope of protection of the present invention.

For the purposes of the present disclosure, it is noted that a user node may perform *caching* of a content object package in several ways. In one embodiment, the node may:
(i) transmit requests for the package to other entities,
(ii) receive the package from one of these entities that stores the package, and
(iii) store the package in its memory.

The stored package is then available for the node's own playback of the content object, but can also be requested by another node desiring to cache or buffer the package. Suitably, the user node initially sends requests to user nodes located nearby (i.e., nodes in respect of which the user node experiences low transmission latency and/or high transmission available bit rate), either one or several at a time. If these requests are unsuccessful, the user node proceeds to sending requests to more distant user nodes. If the network includes a server, notably a support server or a publication server, from which infrequent or missing content object packages can be requested as a fallback measure, then the user node may, as a secondary strategy, send a request to the server and obtain the package from there. The exceptional measure of requesting packages from a server may be particularly useful in connection with newly introduced content objects, wherein the system may still be so sparsely populated with a given content object package that requests for it are generally time-consuming.

In some embodiments, a user node may discontinue caching of a content object (or a particular package thereof) at the request of the publication server or another operator-controlled entity in the content delivery system. The node then blocks the package from transmission to other user nodes and/or blocks it from playback and/or declares it as being free to be overwritten or deleted. In one particular embodiment, a publication server and a user node cooperate to this effect through the medium of a suppression message transmitted from the server to the node. The suppression message may be broadcasted to all user nodes. As an alternative, the suppression message may be sent by a server in response to an initialization notification received from a user node at its start-up and/or in response to a periodic request received from a user node and indicating, e.g., that the node is ready to participate in publishing. The suppression message specifies a content object (or certain packages forming part of the object) and the corresponding measure to be taken, e.g., deletion, overwriting, playback blocking, transmission blocking. To ensure that a blocked content object is no longer distributed to users by the delivery system, this suppression message may be supplemented by disabling playback in a higher layer, such as through a media player client or a menu system for selecting content object. Non-distribution of a blocked content object can be further supplemented by means of DRM functionalities in the delivery system.

In one embodiment, the publication server is adapted to answer a request for a content object package from a user node by transmitting this package to the requesting node. This helps the user node cache the packages specified by the initial distribution plan in conditions where the packages are infrequent in the environment of the user node. In such conditions, it may be time-consuming for the user node to find other nodes storing the packages. Additionally, these nodes may be located far from the requesting node (in terms of network distance, a measure of the closeness of two network nodes, e.g., Internet distance) so that their transmission will take place at a relatively low rate.

In some embodiments, the publication server is adapted to use a different communication interface for transmitting requested content object packages to nodes than the interface used by the server for transmitting (portions of) the initial distribution plan. These at least two different communication interfaces may be different as regards their hardware or configuration, but the difference essential to these embodiments is that the communication interfaces are used for different purposes. Thus, one communication interface is used for transmitting relatively small and possibly time-critical communications encoding the initial distribution plan, whereas another communication interface is used for transmitting relatively large content object packages to user nodes unable to retrieve these from other user nodes, wherein occasional waiting times are less serious. This allows the transmission of an initial distribution plan to proceed without interruption.

To limit the workload on the publication server, it is advantageous to restrict the possibility of nodes requesting a content object package. As an example, the publication server may verify that the requesting user node is included in an initial distribution plan (preferably, in one having been sent out relatively recently, within a predetermined period back in time) before the server answers the request. It follows by the discussions above that the inclusion of the user node in an initial distribution plan may be equivalent to the node fulfilling of a number of qualifying conditions.

Also in the interest of limiting the workload on the publication server, the user node may in some embodiments be configured to perform a certain number of requests for a given package from other nodes - or to transmit requests to other user nodes for a predetermined time period - before it requests the package from the publication server. Similarly, the user node may be configured to request a given package from nodes at increasing network distance from itself; after the user node has sent unsuccessful requests to the nodes within a predefined network distance, it may turn directly to the publication server to expedite the caching of the package. A request may be regarded as unsuccessful if it is not answered at all or if it does not lead to the receipt of the requested package (that is, the node replies that it does not store the package).

The previous embodiment may be further developed in embodiments where the initial distribution plan specifies the collection of user nodes non-uniquely, as described above. The publication server may then handle a user node's request for a non-received package by verifying, before answering, that the node is included in the collection and that the node is one of the nodes for which caching availability has been established. If a ticking-off procedure is included, then the server may verify whether the nodes is one of those having caused tick-off of the package it requests. A similar modification of the previous embodiment may also be advantageous if (portions of) the initial distribution plan are sent out only to nodes from which the publication server has received an availability notification (or with priority given to such nodes). Analogously, a node's request for a content object package will be refused unless the node is included in the collection and has been entrusted with carrying out the initial distribution plan.

In one embodiment, the publication server is adapted to transmit the packages of a content object to at least one user node in connection with the transmission of the initial distribution plan to concerned user nodes. This enables the user nodes which are to cache the content object packages to retrieve these from other user nodes more easily without contacting the publication server.

In one embodiment, at least one support server is provided in the content delivery system. The support server is adapted to store content object packages, which it maintains available to user nodes. For instance, a user node may utilize a support server as a fallback option for caching a content object package specified by the initial distribution plan. Preferably, to limit the load on a support server, a user node is configured to make at least a predefined amount of attempts to cache a given packages by requesting it from other user nodes before it requests it from a support server. In this embodiment, the publication server is adapted to perform the step of enabling the support server access to one or more package of a content object in connection with the transmission of the initial distribution plan for this content object. Enabling access may consist in transmitting the content object package to the support server or in notifying the support server of a storage location of the content object package or in notifying the support server of the (imminent) transmission of the initial distribution plan. It is pointed out that the publication server and the support server may use a common storage device and may in one sense be regarded as one entity in the delivery system. In such a configuration, for the reasons outlined above, it is still expedient to provide the entity with different communication interfaces for the purposes of publication (transmission of initial distribution plans) and of support (transmission of content object packages to requesting user nodes).

In one embodiment, a user node in the content delivery system is adapted to transmit a completion notification to the publication server after it has cached the content object package(s) specified by an initial distribution plan transmitted to the node from the server. This enables the publication server to monitor the progress of the implementation of the initial publication plan. If the progress is too slow or if failure is reported, the publication server may take measures to remedy this, such as adding user nodes to the collection of nodes which are to cache the content object packages. Importantly, the publication server is able to determine based on the completion notifications from the user nodes at what point in time it should enable user access to the content object on a higher layer of the content delivery system. For instance, when the caching has been completed to a some minimum percentage for all packages of a content object, the publication server may signal to users through a player client or a menu system that playback of this content is available.

Features from two or more embodiments outlined above can be combined, unless they are clearly complementary, to form further embodiments.

The fact that two features are recited in different claim does not preclude that they can be combined to advantage. Likewise, further embodiments can also be provided through the omission of certain features that are not necessary or not essential for the desired purpose. As one example, the partitioning means of the publication server may be unnecessary in embodiments where the server is configured to receive pre-partitioned content objects.

### Brief description of drawings

Embodiments of the invention will now be described in greater detail with reference to the accompanying drawings, on which:
figure 1 illustrates a distribution method in a content delivery system according to related art;
figure 2 illustrates a distribution method in a content delivery system according to an embodiment of the invention, wherein this system includes a publication server according to an embodiment of the invention;
figure 3 is a generalized block diagram of a user node according to an embodiment of the invention;
figure 4a shows a publication server according to an embodiment of the invention;
figure 4b shows a combined publication server and support server, according to an embodiment of the invention; and
figure 5 is two flowcharts of distribution methods to be performed by a publication server and a user node, respectively.

### Detailed description of embodiments

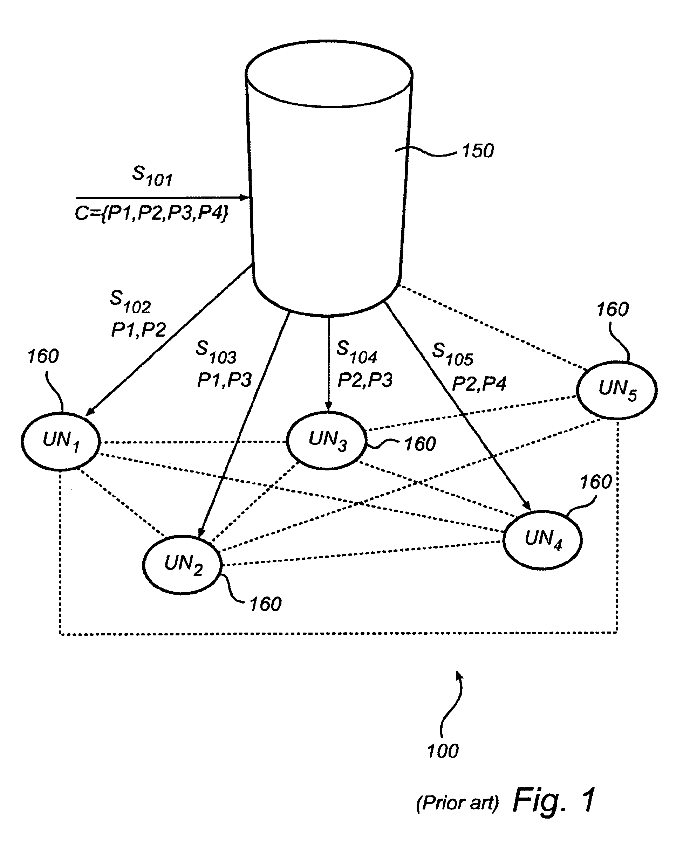

Figure 1 illustrates a distribution method according to the applicant's earlier application cited above. The figure shows a delivery system 100 including a publication server 150 and several user nodes 160, five of which are shown. All units are connected by a communication network allowing each unit to make direct contact with each other unit (although the physical network may not necessarily have a maximally connected topology), as indicated by the dashed connection lines. The connection lines actually used for transmitting data in this example are drawn as solid arrows indicating the direction of the transmission. In a first step S101, the publication server 150 receives a content object C partitioned into four packages P1, P2, P3, P4. In a second step S102, the publication server 150 transmits packages P1, P2 to a first user node UN1, which stores these. In a third step S103, it transmits packages P1, P3 to a second user node UN2. In a fourth step S104, it transmits packages P2, P3 to a third user node UN3. In a fifth step S105, it transmits packages P2, P4 to a fourth user node UN4. Some nodes in the delivery system 100, such as a fifth user node UN5, do not receive any content object packages but may be able to request playback of content objects, the packages of which are stored on other user nodes. Hence, by this method the publication server 150 transmits each package of the content object directly to at least one user node 160.

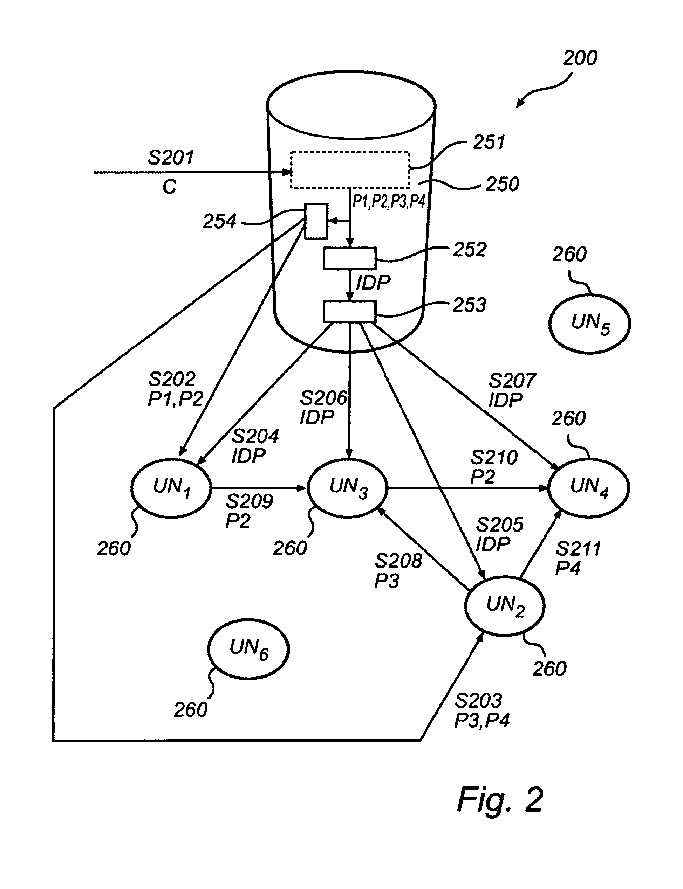

Figure 2 illustrates a distribution method in a content delivery system 200 according to an embodiment of the present invention. The system 200 comprises a publication server 250 and a plurality of user nodes 260. Data can be transmitted between the server 250 and each node 260 and within each pair of nodes 260; for the sake of clarity only some of the possible connections have been indicated on the drawing. The publication server 250 includes a communication means 251 for receiving a content object C (e.g., from a delivery system operator or a content provider) and defining a partition into packages P1, P2, P3, .... If a content object is already partitioned into packages, the communication means 251 merely recognizes this fact. On the basis of the partition into packages, a distribution planner 252 in the publication server 250 derives an initial distribution plan (IDP). In order that this example clearly illustrates the differences between the present invention and the prior art, the IDP is assumed to coincide with the distribution shown in figure 1, namely:

| Table 1: Initial distribution plan | |
|---|---|
| UN1 | P1, P2 |
| UN2 | P3, P4 |
| UN3 | P2, P3 |
| UN4 | P2, P4 |

Here, the IDP is defined in terms of uniquely defined user nodes. This is but one example of how the invention can be embodied. In other embodiments, the IDP may be defined in generic terms, such as conditions regarding the nodes' capacity, geographical situation, membership in a network cluster (e.g., consisting of the nodes having a common Internet service provider) etc. and may also be conditional on the nodes' availability for transmission, possibly as notified by themselves.

The IDP may be drawn up by an algorithm, such as an optimization algorithm, tending to maximize the availability the packages of the content object C to nodes in (a selected region of) the delivery system 200. In this process, the distribution planner 252 may take the following factors into account: typical past transmission times, ping times, known network topology and clustering, etc. It may also follow a predetermined template selected in dependence of the total size or number of the content object packages to be distributed. For instance, an IDP template suitable for a relatively large content object may prescribe caching of its packages by a relatively larger number of user nodes. Suitably, the IDP may also prescribe that the initial packages are cached by a relatively larger number of user nodes than those at the end of a linear content object, at least if the users of the delivery system are known to sometimes interrupt playback before the end of a content object.

After the content object C has been received (step S201) and the IDP has been drawn up, a further communication means 253 of the publication server 250 transmits the IDP to the concerned user nodes (steps S204 to S207). The IDP information received by each node follows table 1 above, but may be restricted to the information necessary for that very node. Concurrently with the distribution of the IDP, another communication means 254 transmits the packages to two of the user nodes UN1, UN2 involved in the IDP, possibly after receiving active requests for the packages from them. The other nodes UN3, UN4 may thereby cache the packages specified for them by the IDP by requesting the packages from the first nodes (steps S208 to S211) and not from the server. After completion or partial completion of the caching of packages in accordance with the IDP, the user nodes - even nodes UN5, UN6 having not received any package of the content object C - the system 200 may enable the user nodes 260 to play the content object C. The enabling may take place through a higher-level interface, such as a media player application running on user nodes or a network-based selection interface implemented by an application programming interface (API) or the like. It is noted that the locations of respective content object packages may differ considerably from the IDP as soon as playback becomes permitted; this is due to the caching of packages by new nodes requesting playback and also to deletion/overwriting of packages after and during such playback.

In a variant to this embodiment, the entities in the delivery system 200 are adapted to exchange *tracking files* indicating current locations of cached content object packages. A tracking file transmitted by a user node may include not only its own cached content object packages but also those of other (nearby) nodes, so that the receiving node may update its records. In this variant, the IDP may be distributed in a form similar to a tracking file.

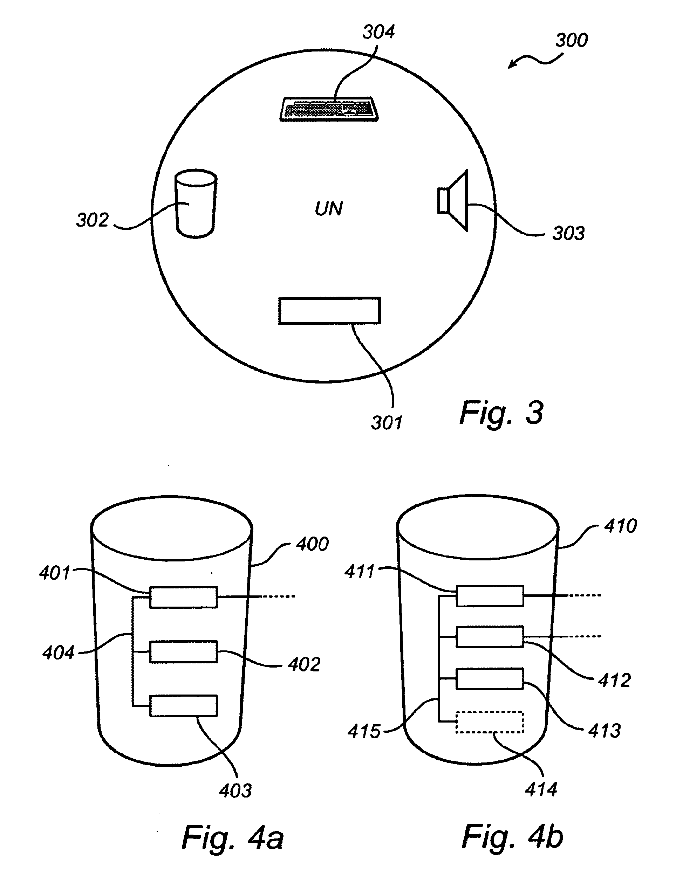

Figure 3 shows a user node 300 suitable for operation in a content delivery network of the type shown in figure 2. The node 300 has a communication interface 301 for transmitting and receiving data, in particular content object packages and IDPs, a memory 302, a playback means 303 (e.g., a display screen, an audio device, tactile means and the like) and an input means 304 enabling a user to select playback of a content object. The selection may take place via an interface displayed by the playback means 303. All these subunits are communicatively coupled (not shown).

The node 300 may carry out a request for playback of a content object by verifying that the initial (referring to the linear structure of the object, if such exists) content object packages are present in the memory 302. If the content object packages currently stored are insufficient to initiate playback, the node 300 requests the necessary packages from other nodes. Preferably, the node 300 makes such requests to nodes which are located close to itself as indicated by typical past transmission times, ping times, known network topology and clustering, etc. If the requests are unsuccessful, the node 300 may resort to requesting the packages from a server, such as a publication or support server. Once the playback has started, the node 300 buffers subsequent packages by similar requests, so that the probability of an interruption of the playback is limited.

The node 300 may be adapted to flag packages already played as being free to overwrite, or to delete such packages actively. This way, storage space is made available for the caching of subsequent packages. Additionally, by avoiding that all packages making up a content object are stored at one node, the risk of illegitimate use of copyrighted material is decreased. Even outside the playback situation, a node may be adapted - for a similar purpose - to delete some of the packages of a content object if these exceed a predetermined percentage of the content object.

For security reasons again, embodiments of the present invention may include protecting content objects, or data (packages) encoding them, by a DRM system or several parallel DRM systems giving different nodes different viewing rights. Available DRM systems may include functionalities with the purpose of interrupting the distribution of a content object to users. To reinforce such interruption functionalities, a content delivery system according to an embodiment of the present invention may include functions for discontinuing caching of a content object, by one or more of the following measures: disabling user nodes' requests for packages of the content object; disabling user nodes' answering to such requests; causing overwriting or deletion of packages stored at user nodes. A user node may be instructed to initiate such discontinuation of caching by a suppression message received from a server. The suppression message may be sent out in response to a periodic request from the node or to a start-up notification. The suppression message may as well be broadcast to all nodes included in the content delivery system, possibly using propagated distribution.

Figure 4 shows two hardware structures of publication servers suitable for use in a content delivery system according to the present invention. Figure 4a is a generalized block diagram of a publication server 400 including a communication means 401, a partitioning means 403 and a distribution planner 402, which are communicatively connected by means of an internal bus 404. The server 400 is connected to other entities in the content delivery system via the communication means 401.

Figure 4b shows a combined publication and support server 410 comprising a first and second communication means 411, 412, a distribution planner 413 and an optional partitioning means 414, all of which are connected by an internal bus 415. The partitioning means 414 is not needed for a server 410 adapted to distributed already partitioned content objects. The provision of dual communication means 411, 412 allows for a division of the server's tasks of publishing content objects by transmitting IDPs and supporting user nodes' implementation of IDPs by supplying missing content object packages to requesting nodes. As outlined above, the first (publishing) communication means 411 handles transmissions of fairly uniform, relatively small size, which may be sensitive to interruptions since they are typically distributed to a large number of nodes per unit time. The second (support) communication means 412, for its part, is responsible for relatively large-sized transmissions, which are in general not very seriously affected by occasional waiting time. Thus, the structure of the combined server 410 represents an advantageous use of the hardware.

It is noted that the previous drawings refer to functional structures and may not correspond to the precise hardware structure of the servers and nodes. One hardware unit may be adapted to execute more than one of the indicated tasks and one task may be effected by several cooperating units. In particular, a processing device may be adapted to execute a number of different functions in an entity operating in the content delivery system.

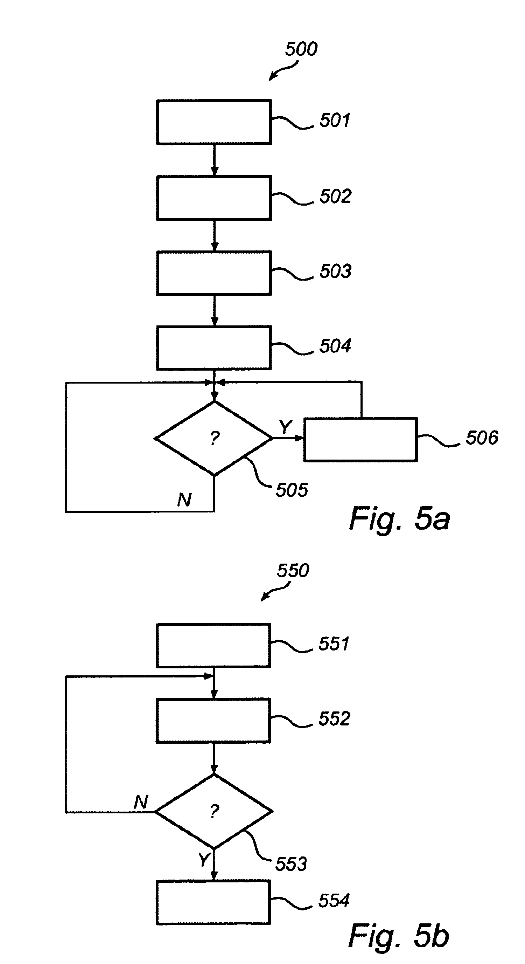

Figure 5a is a flowchart of a content distribution method 500 to be executed by a publication server. In a first step 501, the server receives a content object. In a second step 502, the server defines a partition of the content object into packages. In a third step 503, the server defines an IDP which (uniquely or non-uniquely) identifies a collection of user nodes which are to cache specified packages of the content object. In a fourth step 504, the server transmits the IDP, or relevant portions thereof, to nodes in the collection, possibly with priority to nodes from which the server has received availability notifications. Having done so, the server enters an indefinite support mode 505 in which it checks for user nodes' requests for content object packages and, if a request is received, transmits this in a fifth step 506. The method 500 may start when a new content object is received and may terminate when an operator or administrator of the content delivery system so requests.

Figure 5b shows a distribution method 550 for executing by a user node. In a first step 551, the node receives information specifying at least one content object package to be cached by the node. Responsive hereto, the node transmits, in a second step 552, at least one request for the package and enters a receipt mode 553 in which it checks whether the requested package has been received. If no package is received, the node may repeat the step 552 of transmitting a package request. When the package is received, the node stores, in a third step 554, the package in a memory, maintaining it available to be requested by other nodes.

Each of the methods shown in figure 5 may be implemented as a computer program and may be distributed when stored by a computer-readable medium. By way of example, computer-readable mediums may comprise computer storage media and communication media. As is well known to a person skilled in the art, computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer. Further, it is known to the skilled person that communication media typically embodies computer readable instructions, data structures, program modules or other data in a modulated data signal such as a carrier wave or other transport mechanism and includes any information delivery media.

Even though the present description and drawings disclose embodiments and examples, the invention is not restricted to these specific examples. Numerous modifications and variations can be made without departing from the scope of the present invention, which is defined by the accompanying claims.

## Claims

1. A method of distributing a content object, to be performed by a publication server in a content delivery system, which in addition to the publication server comprises a plurality of interconnected user nodes adapted to cache content object packages and to perform on-demand playback of content objects, the method including the steps of:
receiving a content object;
defining a partition of the content object into at least two packages;
defining an initial distribution plan identifying a collection of user nodes which are to cache the content object and, for each user node in the collection, at least one package of the content object to be cached at that node;
transmitting at least a relevant portion of the initial distribution plan to each node in the collection, enabling the user node to cache said at least one package to be cached at that node; and
receiving, from a user node, a request for a package of the content object and transmitting the requested package to the node.
**characterised by** :
the transmitting of at least a relevant portion of the initial distribution plan is performed using a first communication means; and
the transmitting of the requested package is performed using a second communication means.

2. The method of any one of the preceding claims, wherein the content delivery system further comprises a support server, further comprising the step of:
enabling the support server access to a package of the content object.

3. The method of any one of the preceding claims, further comprising the step of:
transmitting a suppression message to a user node causing this to discontinue caching of a content object to which the message relates.

4. The method of any one of the preceding claims, further comprising the step of receiving an availability notification from a user node,
wherein the step of transmitting at least a relevant portion of the initial distribution plan gives priority to any user node in the collection from which an availability notification has been received.

5. A publication server (250; 400; 410) for a content delivery system (200), which in addition to the publication server comprises a plurality of interconnected user nodes (260; 300) adapted to cache content object packages and to perform on-demand playback of content objects, the publication server comprising:
a first communication means (251, 253, 254; 401; 411) configured to receive a content object;
partitioning means (251; 403; 414) for defining a partition of the content object into at least two packages;
distribution planner (252; 402; 413) for defining an initial distribution plan identifying a collection of user nodes which are to cache the content object and, for each user node in the collection, at least one package of the content object to be cached at that node,
**characterized in that**:
the first communication means is further configured to transmit at least a relevant portion of the initial distribution plan to each node in the collection, enabling the user node to cache said at least one package to be cached; and
a second communication means (412) configured to transmit a content object package requested by a user node to this node.

6. A computer program product comprising a computer-readable medium storing instructions which, when executed on a general-purpose computer, perform the method set out in any one of claims 1 to 4.

## Patentansprüche

1. Verfahren zur Verteilung eines Inhaltsobjekts, das durch einen Publikationsserver in einem Inhaltsbereitstellungssystem durchgeführt werden soll, welches zusätzlich zum Publikationsserver eine Mehrzahl von miteinander verbundenen Benutzerknoten umfasst, die so ausgelegt sind, dass sie Inhaltsobjektpakete zwischenspeichern und eine On-Demand-Wiedergabe von Inhaltsobjekten durchführen, wobei das Verfahren die folgenden Schritte umfasst:
Empfangen eines Inhaltsobjekts;
Definieren einer Teilung des Inhaltsobjekts in mindestens zwei Pakete;
Definieren eines Anfangsverteilungsplans, der eine Sammlung von Benutzerknoten, die das Inhaltsobjekt zwischenspeichern sollen, und für jeden Benutzerknoten in der Sammlung mindestens ein an diesem Knoten zwischenzuspeicherndes Paket des Inhaltsobjekts identifiziert;
Senden mindestens eines relevanten Teils des Anfangsverteilungsplans an jeden Knoten in der Sammlung, der den Benutzerknoten zum Zwischenspeichern des mindestens einen an diesem Knoten zwischenzuspeichernden Pakets befähigt; und
Empfangen von einem Benutzerknoten einer Anforderung für ein Paket des Inhaltsobjekts und Senden des angeforderten Pakets an den Knoten,
**dadurch gekennzeichnet, dass**:
das Senden mindestens eines relevanten Teils des Anfangsverteilungsplans unter Verwendung eines ersten Kommunikationsmittels erfolgt; und
das Senden des angeforderten Pakets unter Verwendung eines zweiten Kommunikationsmittels erfolgt.

2. Verfahren nach einem der vorhergehenden Ansprüche, wobei das Inhaltsbereitstellungssystem einen Unterstützungsserver umfasst, ferner umfassend den folgenden Schritt:
Befähigen des Unterstützungsservers zum Zugreifen auf ein Paket des Inhaltsobjekts.

3. Verfahren nach einem der vorhergehenden Ansprüche, ferner umfassend den folgenden Schritt:
Senden einer Unterdrückungsnachricht an einen Benutzerknoten, die diesen veranlasst, mit dem Zwischenspeichern eines Inhaltsobjekts aufzuhören, auf das sich die Nachricht bezieht.

4. Verfahren nach einem der vorhergehenden Ansprüche, ferner umfassend den Schritt des Empfangens einer Verfügbarkeitsbenachrichtigung von einem Benutzerknoten,
wobei der Schritt des Sendens mindestens eines relevanten Teils des Anfangsverteilungsplans einem beliebigen Benutzerknoten in der Sammlung Vorrang gibt, von dem eine Verfügbarkeitsbenachrichtigung empfangen wurde.

5. Publikationsserver (250; 400; 410) für ein Inhaltsbereitstellungssystem (200), welches zusätzlich zum Publikationsserver eine Mehrzahl von miteinander verbundenen Benutzerknoten (260; 300) umfasst, die so ausgelegt sind, dass sie Inhaltsobjektpakete zwischenspeichern und eine On-Demand-Wiedergabe von Inhaltobjekten durchführen, wobei der Publikationsserver umfasst:
ein erstes Kommunikationsmittel (251, 253, 254; 401; 411), das so konfiguriert ist, dass es ein Inhaltsobjekt empfängt;
Teilungsmittel (251; 403; 414) zum Definieren einer Teilung des Inhaltsobjekts in mindestens zwei Pakete;
einen Verteilungsplaner (252; 402; 413) zum Definieren eines Anfangsverteilungsplans, der eine Sammlung von Benutzerknoten, die das Inhaltsobjekt zwischenspeichern sollen, und für jeden Benutzerknoten in der Sammlung mindestens ein an diesem Knoten zwischenzuspeicherndes Paket des Inhaltsobjekts identifiziert,
**dadurch gekennzeichnet, dass**:
das erste Kommunikationsmittel ferner so konfiguriert ist, dass es mindestens einen relevanten Teil des Anfangsverteilungsplans an jeden Knoten in der Sammlung sendet, der den Benutzerknoten zum Zwischenspeichern des mindestens einen an diesem Knoten zwischenzuspeichernden Pakets befähigt; und
ein zweites Kommunikationsmittel (412) so konfiguriert ist, dass es ein Inhaltsobjektpaket, das von einem Benutzerknoten angefordert wird, an diesen Knoten sendet.

6. Computerprogrammprodukt, umfassend ein computerlesbares Medium, das Befehle speichert, welche, wenn auf einem Universalcomputer ausgeführt, das Verfahren nach einem der Ansprüche 1 bis 4 durchführen.

## Revendications

1. Procédé de distribution d'un objet de contenu, à effectuer par un serveur de publication dans un système de livraison de contenu, qui en plus du serveur de publication comprend une pluralité de noeuds d'utilisateurs interconnectés aptes à mettre en mémoire cache des paquets d'objets de contenu et à effectuer une lecture à la demande d'objets de contenu, le procédé comprenant les étapes de :
la réception d'un objet de contenu ;
la définition d'une partition de l'objet de contenu en au moins deux paquets ;
la définition d'un plan de distribution initial identifiant une collection de noeuds d'utilisateurs qui doivent mettre en mémoire cache l'objet de contenu et, pour chaque noeud d'utilisateur dans la collection, au moins un paquet de l'objet de contenu à mettre en mémoire cache à ce noeud ;
la transmission d'au moins une portion pertinente du plan de distribution initial à chaque noeud dans la collection, en permettant au noeud d'utilisateur de mettre en mémoire cache ledit au moins un paquet à mettre en mémoire cache à ce noeud ; et
la réception, d'un noeud d'utilisateur, d'une demande d'un paquet de l'objet de contenu et la transmission du paquet demandé au noeud,
**caractérisé par** :
la transmission d'au moins une portion pertinente du plan de distribution initial est effectuée en utilisant un premier moyen de communication ; et
la transmission du paquet demandé est effectuée en utilisant un deuxième moyen de communication.

2. Procédé selon l'une quelconque des revendications précédentes, dans lequel le système de livraison de contenu comprend en outre un serveur de support, comprenant en outre l'étape de :
l'autorisation au serveur de support d'accéder à un paquet de l'objet de contenu.

3. Procédé selon l'une quelconque des revendications précédentes, comprenant en outre l'étape de :
la transmission d'un message de suppression à un noeud d'utilisateur l'amenant à cesser la mise en mémoire cache d'un objet de contenu sur lequel porte le message.

4. Procédé selon l'une quelconque des revendications précédentes, comprenant en outre l'étape de la réception d'une notification de disponibilité de la part d'un noeud d'utilisateur,
dans lequel l'étape de la transmission d'au moins une portion pertinente du plan de distribution initial donne la priorité à un noeud d'utilisateur quelconque dans la collection duquel une notification de disponibilité a été reçue.

5. Serveur de publication (250 ; 400 ; 410) pour un système de livraison de contenu (200), qui en plus du serveur de publication comprend une pluralité de noeuds d'utilisateurs interconnectés (260 ; 300) aptes à mettre en mémoire cache des paquets d'objets de contenu et à effectuer une lecture à la demande d'objets de contenu, le serveur de publication comprenant :
un premier moyen de communication (251, 253, 254 ; 401 ; 411) configuré pour recevoir un objet de contenu ;
un moyen de partitionnement (251 ; 403 ; 414) pour définir une partition de l'objet de contenu en au moins deux paquets ;
un planificateur de distribution (252 ; 402 ; 413) pour définir un plan de distribution initial identifiant une collection de noeuds d'utilisateurs qui doivent mettre en mémoire cache l'objet de contenu et, pour chaque noeud d'utilisateur dans la collection, au moins un paquet de l'objet contenu à mettre en mémoire cache à ce noeud,
**caractérisé en ce que** :
le premier moyen de communication est en outre configuré pour transmettre au moins une portion pertinente du plan de distribution initiale à chaque noeud dans la collection, en permettant au noeud d'utilisateur de mettre en mémoire cache ledit au moins un paquet à mettre en mémoire cache ; et
un deuxième moyen de communication (412) configuré pour transmettre un paquet d'objet de contenu demandé par un noeud d'utilisateur à ce noeud.

6. Produit de programme informatique comprenant un support lisible par ordinateur stockant des instructions qui, lorsqu'elles sont exécutées sur un ordinateur d'usage général, effectuent le procédé selon l'une quelconque des revendications 1 à 4.
